# DEMANDE DE BREVET EUROPEEN

(11) **EP 1 782 987 A2**
(43) Date de publication de la demande: **09.05.2007**
(21) Numéro de dépôt: 06350011.0
(22) Date de dépôt: 06.09.2006
(51) Int. Cl.: B60J 10/00, B60J 10/10, B60J 7/12

(54) **Dispositif d'evacuation d'eau pour un toit escamotable**

(30) Priorité: 04.11.2005 FR 0511234
(71) Demandeur: Heuliez, 79140 Cerizay (FR)
(72) Inventeur: Becot, Pascal, 49310 Saint Paul du Bois (FR); Deschatres , Bernard, 79300 Saint Sauveur Givre en Mai (FR)
(74) Mandataire: Tournel, Jean Louis

(57) **Abrégé**

Dispositif d'évacuation d'eau d'au moins une gouttière d'un toit rétractable de véhicule caractérisé en ce que la conduite (9) intermédiaire solidaire du déplacement du toit mobile est, d'une part, par sa partie amont (9A), fixée sur l'avaloir (8) et, d'autre part, par sa partie aval (9B), reliée à la conduite (10) d'évacuation par une liaison (11) à emboîtement en sorte que lorsque le toit mobile se déplace vers la position de rangement, cette partie aval (9B) se déboîte pour interrompre la continuité et inversement lorsque le toit mobile couvre l'habitacle.

## Description

L'invention se rapporte à un dispositif d'évacuation d'eau pour un toit escamotable de véhicule.

Un toit mobile escamotable comprend généralement des gouttières latérales le long des bords latéraux d'éléments de toit escamotable et une gouttière transversale située au niveau de la base de la lunette ou de l'élément de toit arrière.

Ces gouttières ont pour fonction de collecter l'eau qui s'écoule du toit et notamment qui parvient à franchir les moyens d'étanchéité qui sont prévus entre les différents éléments de toit ou panneaux composant le toit et la structure fixe.

Cette eau collectée doit être évacuée vers le sol par une conduite d'évacuation généralement placée à l'intérieur de la caisse.

Sur les véhicules à toit rétractable, les éléments du toit sont mobiles par rapport à la conduite d'évacuation fixe et cela pose donc un problème pour l'acheminement de l'eau collectée.

Pour obvier à cette difficulté, il est connu EP 1 281 547 de prévoir en sortie de la gouttière, entre le collecteur et la conduite d'évacuation, une conduite souple de longueur supérieure à la distance entre le collecteur et la conduite d'évacuation.

Du fait de sa longueur et de sa souplesse, le mouvement du toit est permis. Cette conduite souple est attachée à ses deux extrémités, à savoir sur le collecteur et sur la conduite d'évacuation.

On déplore cependant une usure de cette conduite liée aux multiples manoeuvres du toit. Ces manoeuvres plient la conduite à chaque fois et donc affaiblissent celle-ci en certains endroits.

Cette usure peut être accentuée dans le temps en raison du vieillissement du matériau qui devient plus cassant.

L'invention propose un dispositif d'évacuation plus fiable.

A cet effet, l'invention se rapporte à un dispositif d'évacuation d'eau d'au moins une gouttière d'un toit rétractable de véhicule lequel est mobile entre une position de rangement et une position couvrant l'habitacle, ce dispositif d'évacuation comprenant un avaloir présenté par un des éléments du toit mobile, une conduite d'évacuation fixée sur la caisse du véhicule et une conduite intermédiaire, ce dispositif étant
caractérisé en ce que la conduite intermédiaire solidaire du déplacement du toit mobile est, d'une part, par sa partie amont, fixée sur l'avaloir et, d'autre part, par sa partie aval, reliée à la conduite d'évacuation par une liaison à emboîtement en sorte que lorsque le toit mobile se déplace vers la position de rangement, cette partie aval se déboîte pour interrompre la continuité et inversement lorsque le toit mobile couvre l'habitacle.

L'invention sera bien comprise à l'aide de la description ci-après faite à titre d'exemple non limitatif en regard du dessin qui représente schématiquement
FIG 1 : Une vue partielle en ¾ arrière d'un toit mobile
FIG 2 : Le toit de la figure 2 avec le dispositif d'évacuation logé dans le véhicule
FIG 3A à 3C : la cinématique du toit et du dispositif d'évacuation.

En se reportant au dessin, on voit un toit 1 rétractable de véhicule.

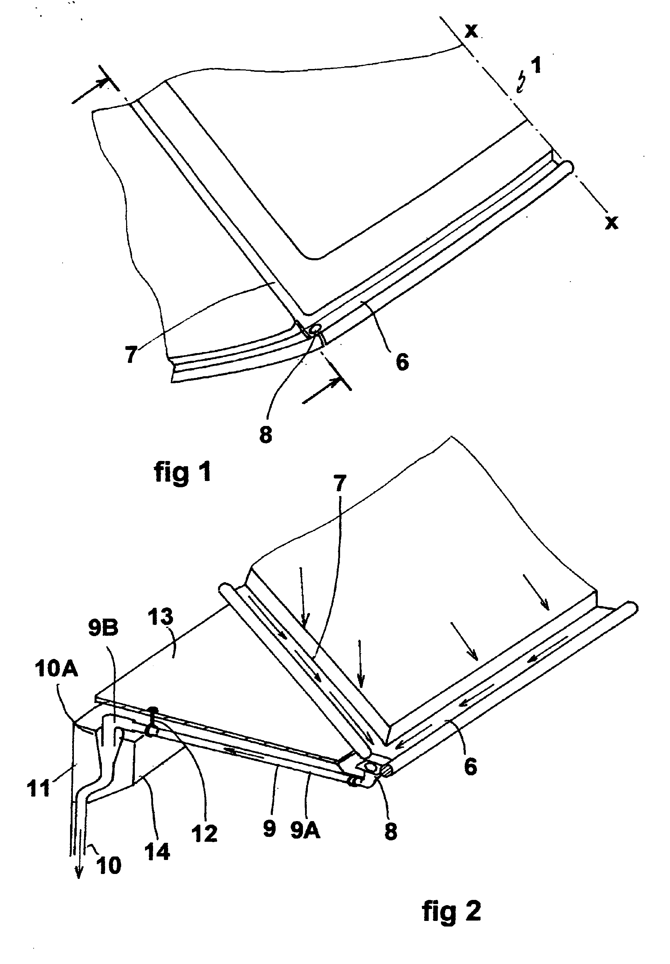

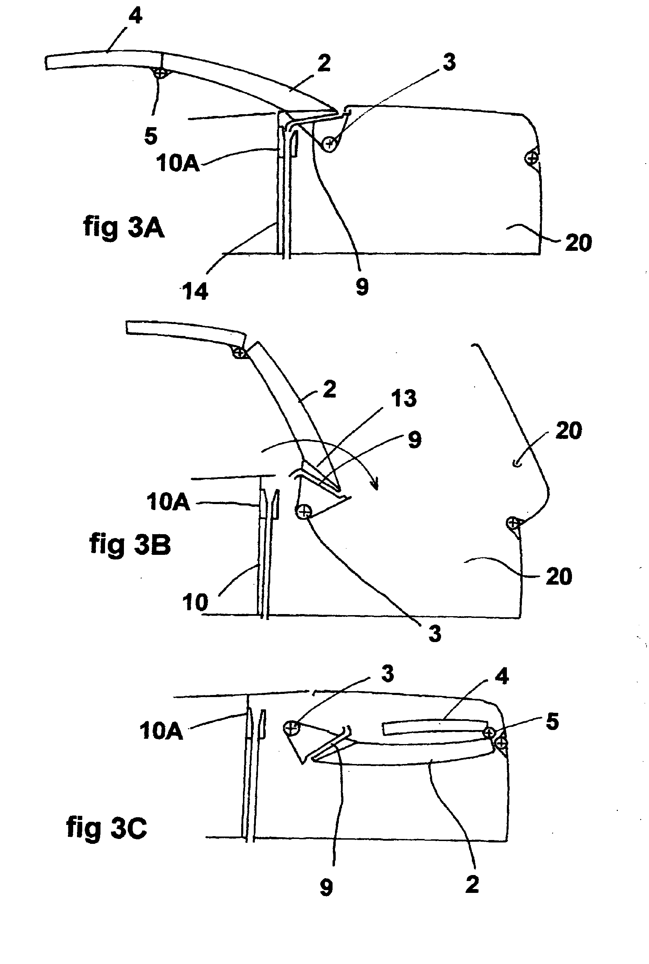

Comme on peut le voir, ce toit rétractable peut occuper une position de rangement (figure 3C) où il est logé dans un coffre 20 et une position où ce toit couvre l'habitacle (figures 1,2 et 3A).

Comme on peut le voir figure 3A l'élément 2 de toit arrière est monté pivotant autour d'un axe 3 transverse porté par la caisse du véhicule et l'élément 4 de toit avant est articulé autour d'un second axe 5 transverse sur le bord avant de l'élément de toit arrière.

Le dispositif de manoeuvre de ce toit n'a pas été représenté pour alléger le dessin.

Des gouttières 6,7 s'étendent le long des bords de ce toit rétractable.

On voit notamment que la gouttière 6 transversale située entre la base du toit mobile et le capot du coffre comporte en un point bas, un avaloir 8 qui se prolonge par une conduite 9 intermédiaire qui se prolonge elle-même par une conduite 10 d'évacuation située à l'intérieur de la caisse du véhicule.

Par conduite, on comprendra un élément tubulaire ouvert à ses deux extrémités à l'inverse d'une gouttière.

L'eau collectée s'évacue par gravité au travers de ce dispositif d'évacuation.

Selon l'invention, la conduite 9 intermédiaire solidaire du déplacement du toit mobile est, d'une part, par sa partie amont 9A, fixée sur l'avaloir 8 et, d'autre part, par sa partie aval 9B, reliée à la conduite 10 d'évacuation par une liaison 11 à emboîtement en sorte que lorsque le toit mobile se déplace vers la position de rangement, cette partie aval 9B se déboîte pour interrompre la continuité et inversement lorsque le toit mobile couvre l'habitacle.

Ainsi, la liaison par emboîtement permet de séparer la conduite 9 intermédiaire de la conduite 10 d'évacuation lors du rangement du toit et de rétablir la liaison hydraulique lorsque le toit est mis en place. Cet emboîtement se fait avec un jeu non négligeable de sorte de ne pas forcer sur les conduites lors de l'emboîtement ou du déboîtement.

La partie 9B aval de la conduite intermédiaire est dirigée vers le bas en sorte que le mouvement de pivot du toit l'engage automatiquement dans une partie femelle 10 A de la conduite d'évacuation qui pourrait être en forme d'entonnoir, c'est à dire ayant une partie conique.

La conduite intermédiaire peut ainsi être rigide et solidaire au moins indirectement de l'élément arrière de toit ou d'une tablette qui y serait attachée.

Comme on peut le voir sur la figure 2, l'avaloir 8 se prolonge par une partie coudée qui se raccorde à la conduite 9 intermédiaire qui est fixée par des moyens 12 de liaison sous la tablette. Les moyens de liaison pourront être des moyens du type à attache rapide tels que des clips etc..

La conduite intermédiaire pourrait être intégrée, pour partie, dans l'épaisseur de la tablette 13 .Cette tablette pourra avantageusement former la plage arrière. Elle pourra également être liée à l'élément de toit arrière.

Cette conduite intermédiaire pourrait être en partie souple ou rigide. Il importe peu car elle suit le mouvement de l'élément sur lequel elle est fixée, par exemple, à l'aide d'attaches rapides. Elle ne subit donc pas de pliage lors des mouvements de toit.

La partie libre terminale de cette conduite 9 intermédiaire présente un coude en sorte que l'extrémité terminale rigide soit tournée vers le bas et s'engage facilement dans une partie femelle 10 A de section plus importante lorsque le toit est en position couvrant l'habitacle. Cette partie femelle est l'entrée de la conduite d'évacuation qui est solidaire de la caisse et par exemple d'une cloison 14 ou d'un élément de structure.

Cette conduite d'évacuation peut être intégrée à la cloison.

On pourra au besoin disposer un joint souple à l'endroit de l'emboîtement entre l'extrémité terminale de la conduite intermédiaire et la partie femelle 10A Ce joint souple sera, par exemple, fixé sur la partie femelle et comportera une découpe dans laquelle s'engage la partie terminale aval de la conduite intermédiaire. Il est actif lorsque le toit mobile couvre l'habitacle.

Les figures 3A à 3C montrent la cinématique de ce dispositif d'évacuation.

En figure 3B, on voit que le toit en cours de déplacement, le capot du coffre étant ouvert. L'extrémité aval de la conduite intermédiaire est désengagée de la conduite d'évacuation et se déplace en même temps que le toit.

On peut prévoir un dispositif d'évacuation de part et d'autre du véhicule.

L'avaloir est apte à collecter l'eau provenant d'au moins une gouttière disposée entre des éléments de toit mobiles les uns par rapport aux autres.

## Revendications

1. Dispositif d'évacuation d'eau d'au moins une gouttière d'un toit rétractable de véhicule lequel est mobile entre une position de rangement et une position couvrant l'habitacle ce dispositif d'évacuation comprenant un avaloir présenté par un des éléments du toit mobile et permettant de collecter l'eau provenant du toit et/ou de la gouttière, une conduite d'évacuation fixée sur la caisse du véhicule et une conduite intermédiaire, ce dispositif étant **caractérisé en ce que** la conduite (9) intermédiaire solidaire du déplacement du toit mobile est, d'une part, par sa partie amont (9A), fixée sur l'avaloir (8) et, d'autre part, par sa partie aval (9B), reliée à la conduite (10) d'évacuation par une liaison (11) à emboîtement en sorte que lorsque le toit mobile se déplace vers la position de rangement, cette partie aval (9B) se déboîte pour interrompre la continuité et inversement lorsque le toit mobile couvre l'habitacle.

2. Dispositif d'évacuation selon la revendication 1 **caractérisé en ce que** l'emboîtement se fait avec un jeu non négligeable.

3. Dispositif d'évacuation selon la revendication 1 ou 2 **caractérisé en ce que** la partie amont de la conduite d'évacuation est une partie femelle conique.

4. dispositif d'évacuation selon la revendication 1 **caractérisé en ce que** la conduite intermédiaire est solidaire d'un élément de toit et/ou d'une tablette.

5. Dispositif selon la revendication 4 **caractérisé en ce que** la conduite intermédiaire est fixée par des moyens du type à attaches rapides.

6. Dispositif d'évacuation selon la revendication 4 **caractérisé en ce que** la conduite intermédiaire est intégrée pour partie dans l'épaisseur d'une tablette.

7. Dispositif d'évacuation selon l'une quelconque des revendications précédentes **caractérisé en ce que** la partie (9B) aval de la conduite intermédiaire est dirigée vers le bas en sorte que le mouvement du toit dans un premier sens engage automatiquement la partie aval de la conduite intermédiaire dans une partie femelle (10 A) de la conduite d'évacuation et un déplacement dans un deuxième sens dégage la partie aval de la partie femelle.

8. Dispositif d'évacuation selon l'une quelconque des revendications précédentes **caractérisé en ce que** l'avaloir est apte à collecter l'eau provenant d'au moins une gouttière disposée entre des éléments de toit mobiles les uns par rapport aux autres.

9. Dispositif d'évacuation selon l'une quelconque des revendications 1 à 3 **caractérisé en ce qu'**il comprend un joint souple entre la partie aval de la conduite intermédiaire et la conduite d'évacuation actif lorsque le toit mobile recouvre l'habitacle.

10. Dispositif d'évacuation selon l'une quelconque des revendications précédentes **caractérisé en ce que** la conduite intermédiaire est au moins localement rigide dans sa partie aval.
